# EUROPEAN PATENT APPLICATION

(11) **EP 3 989 144 A1**
(43) Date of publication of application: **27.04.2022**
(21) Application number: 20846805.8
(22) Date of filing: 17.03.2020
(51) Int. Cl.: G06Q 10/08, G06F 21/64

(54) **BLOCKCHAIN-BASED LOGISTICS PHYSICAL ITEM HANDOVER METHOD, PLATFORM AND STORAGE MEDIUM**

(30) Priority: 01.08.2019 CN 201910708551
(71) Applicant: Beijing Jingdong Zhenshi Information Technology Co., Ltd., Beijing, Beijing 100086 (CN)
(72) Inventor: YANG, Wenfeng, Beijing 100086 (CN); XIU, Binbin, Beijing 100086 (CN); ZHE, Wenming, Beijing 100086 (CN)
(74) Representative: Brevalex
(86) International application number: PCT/CN2020/079769
(87) International publication number: WO 2021/017485

(57) **Abstract**

Provided in embodiments of the present application are a blockchain-based logistics physical item handover method, a platform and a storage medium, the blockchain-based logistics physical item handover method comprising: if a sender node in a blockchain authorizes a parcel comprising at least one item to a receiver node in the blockchain, transferring at least one item in a first blockchain wallet of the sender node to a second blockchain wallet of the receiver node, each item having a unique digital rights certification identification; acquiring an acceptance result of the receiver node for the at least one item; processing the at least one item on the basis of the acceptance result by means of the receiver node, and storing the processing result in the blockchain.

## Description

### CROSS-REFERENCE TO RELATED APPLICATION

The present application is based on and claims priority to Chinese patent application No. 201910708551.6, filed on August 2, 2019, the disclosure of which is hereby incorporated by reference in its entirety.

### TECHNICAL FIELD

Embodiments of the present disclosure relate to, but are not limited to the computer technology, and in particular, to a Blockchain-based method and platform for logistics physical item handover, and storage medium.

### BACKGROUND

At present, in logistics, delivery items are transferred between different objects. In order to track the transfer of property rights, there will be many logistics documents. After receiving an express delivery, a receiver will sign the document of the express delivery, and a courier will return the signed document to a sender. However, it takes a long time to manually return the document to the sender and the document is easy to be tampered with.

### SUMMARY

The embodiments of the present disclosure provide a Blockchain-based method and platform for logistics physical item handover, and storage medium, which aim to solve the problem that manual return of documents to a sender takes a long time and the documents are easy to be tampered with in a related art, and implement real-time check of inventory information of items in each Blockchain wallet and tracking of transfer information of items among the Blockchain wallets.

Technical solutions of the embodiments of the present disclosure may be implemented as follows.

According to a first aspect, the embodiments of the present disclosure provide a Blockchain-based method for logistics physical item handover, which may include the following operations.

If a sender node in a Blockchain approves a package including at least one item to a receiver node in the Blockchain, the at least one item in a first Blockchain wallet of the sender node is transferred to a second Blockchain wallet of the receiver node. Herein, each item has a unique digital rights certification identification.

A check and acceptance result of the receiver node for the at least one item is acquired.

The at least one item is processed by the receiver node based on the check and acceptance result, and a processing result is stored into the Blockchain.

Optionally, the method may further include the following operations.

If the sender node in the Blockchain approves the package including at least one item to the receiver node in the Blockchain, it is determined that the property right of the at least one item is transferred and property right transfer information is obtained.

The property right transfer information is stored into the Blockchain.

Optionally, the operation of processing the at least one item by the receiver node based on the check and acceptance result may include the following operations.

If the check and acceptance result represents that the receiver node determines that the at least one item satisfies a check and acceptance condition, the receiver node signs for the at least one item based on the check and acceptance result.

Account of the at least one item is recorded to the second Blockchain wallet.

Optionally, the operation of storing the processing result into the Blockchain may include the following operations.

A first processing result representing that the receiver node signs for the at least one item is stored into the Blockchain.

A second processing result representing that account of the at least one item is recorded to the second Blockchain wallet is stored into the Blockchain.

Optionally, the operation of processing the at least one item by the receiver node based on the check and acceptance result may include the following operations.

If the check and acceptance result represents that the receiver node determines that the at least one item does not satisfy the check and acceptance condition, the receiver node refuses to sign for the at least one item based on the check and acceptance result.

The at least one item is transferred to the first Blockchain wallet.

Optionally, the operation of storing the processing result into the Blockchain may include the following operations.

A third processing result representing that the receiver node refuses to sign for the at least one item is stored into the Blockchain.

A fourth processing result representing that the at least one item is transferred to the first Blockchain wallet is stored into the Blockchain.

Optionally, the method may further include the following operations.

A first operation of retrieving the first Blockchain wallet based on a first wallet address is acquired.

Based on the first operation, first information associated with items in the first Blockchain wallet is acquired through the first wallet address.

Optionally, the method may further include the following operations.

A second operation of retrieving the second Blockchain wallet based on a second wallet address is acquired.

Based on the second operation, second information associated with items in the second Blockchain wallet is acquired through the second wallet address.

According to a second aspect, the embodiments of the present disclosure provide a Blockchain-based method for logistics physical item handover, which may include the following operations.

A package including at least one item is approved to a receiver node in a Blockchain.

The at least one item in a first Blockchain wallet of a sender node is transferred to a second Blockchain wallet of the receiver node. Herein, each item has a unique digital rights certification identification.

According to a third aspect, the embodiments of the present disclosure provide a Blockchain-based method for logistics physical item handover, which may include the following operations.

If a sender node in a Blockchain approves a package including at least one item to a receiver node in the Blockchain, and the at least one item in a first Blockchain wallet of the sender node is transferred to a second Blockchain wallet of the receiver node, the at least one item is checked and accepted to obtain a check and acceptance result. Herein, each item has a unique digital rights certification identification.

The at least one item is processed based on the check and acceptance result, and a processing result is stored into the Blockchain.

According to a fourth aspect, the embodiments of the present disclosure provide a Blockchain-based platform for logistics physical item handover. The Blockchain-based platform for logistics physical item handover may include a memory and a processor.

The memory is configured to store executable instructions.

The processor is configured to execute the executable instructions stored in the memory to implement the steps of the above Blockchain-based method for logistics physical item handover.

According to a fifth aspect, the embodiments of the present disclosure provide a storage medium. The storage medium stores one or more programs, and the one or more programs may be executed by one or more processors, so as to implement the steps of the Blockchain-based method for logistics physical item handover described above.

By the present disclosure of the embodiments of the present disclosure, the following beneficial effects are implemented: paper documents are canceled and electronic documents are employed. During item handover, the electronic documents representing the circulation of items are recorded on the Blockchain to prevent the electronic documents from being tampered with and traceable. At the same time, the electronic documents co-chain in real time, which ensures that all nodes of logistics physical item handover in the Blockchain know the logistics status in time. In addition, a single physical item is described as a Token of ERC-721, so that the physical item handover is implemented, and a final holder of the property right is recorded in the wallet address of the user who currently holds the item. Real-time check of inventory information of the items in each Blockchain wallet and tracking of transfer information of the items among the various Blockchain wallets are implemented.

The embodiments of the present disclosure provide a Blockchain-based method for logistics physical item handover and platform, and a storage medium. The method includes that: if a sender node in a Blockchain approves a package including at least one item to a receiver node in the Blockchain, the at least one item in a first Blockchain wallet of the sender node is transferred to a second Blockchain wallet of the receiver node. Herein, each item has a unique digital rights certification identification. An check and acceptance result of the receiver node for the at least one item is acquired. The at least one item is processed by the receiver node based on the check and acceptance result and the processing result is stored in the Blockchain. It is to be understood that the processing result is part of the information that constitutes an electronic document. Therefore, the problems that it takes a long time to manually return documents to the sender and the documents are easy to be tampered with in the related art are solved. It is implemented that the electronic documents are stored in the Blockchain in time. It is ensured that the electronic documents are not tampered with and traceable. It is ensured that each node in the Blockchain may know the information in the electronic documents in real time and the logistics statuses of the items and the related information of the transfer of the property rights of the items are grasped.

### BRIEF DESCRIPTION OF THE DRAWINGS

FIG. 1 is a flowchart of a Blockchain-based method for logistics physical item handover according to an embodiment of the present disclosure.
FIG. 2 is a flowchart of another Blockchain-based method for logistics physical item handover according to an embodiment of the present disclosure.
FIG. 3 is a flowchart of yet another Blockchain-based method for logistics physical item handover according to an embodiment of the present disclosure.
FIG. 4 is a flowchart of a Blockchain-based method for logistics physical item handover according to another embodiment of the present disclosure.
FIG. 5 is a schematic structural diagram of a Blockchain-based platform for logistics physical item handover according to an embodiment of the present disclosure.

### DETAILED DESCRIPTION

To make the objectives, technical solutions, and advantages of the embodiments of the present application clearer, the specific technical solutions of the present application are described below in detail with reference to the accompanying drawings in the embodiments of the present application. The following embodiments are used for illustrating the present application rather than limiting the scope of the present application.

Unless otherwise defined, all technological and scientific terms used in the present application have meanings the same as those usually understood by those skilled in the art of the present disclosure. The terms used in the present application are only adopted to describe the embodiments of the present disclosure and not intended to limit the present disclosure.

"Some embodiments" involved in the following descriptions describes a subset of all possible embodiments. However, it can be understood that "some embodiments" may be the same subset or different subsets of all the possible embodiments, and may be combined without conflicts.

It is to be noted that terms "first/second/third" involved in the embodiments of the present disclosure are only for distinguishing similar objects and do not represent a specific sequence of the objects. It can be understood that "first/second/third" may be interchanged to specific sequences or orders if allowed to implement the embodiments of the present disclosure described herein in sequences except the illustrated or described ones.

Before the embodiments of the present disclosure are further described in detail, nouns and terms involved in the embodiments of the present disclosure will be described. The nouns and terms involved in the embodiments of the present disclosure are applied to the following explanations.
1) Digital rights certification is digital certification on behalf of the warrants owned by a holder, which is formed based on the cryptography principle in a Blockchain network. It includes encrypted digital currency such as Bitcoin (BTC) and Ethereum (ETH), and may also include Tokens such as securities, bonds/derivative market products.
2) ERC-721 are Non-Fungible Tokens (NFTs), that is, non-interchangeable Tokens, each of which may be understood as a unique one. That is to say, each Token of ERC721 has an independent and unique Token identity document (TokenID), which is a protocol standard of smart contracts on the Ethereum Blockchain.
3) A Blockchain wallet is a support system that stores public keys and private keys of password currency headed by BTC, addresses corresponding to the private keys, the currency settlement of the addresses (group), and currency transactions. It is to be understood that such a support system even includes keeping accounts and maintenance of the entire Blockchain. Since the cryptocurrency is based on Blockchain, the actual amount is based on the final record result of the Blockchain. Since ETH introduced an ERC-721 protocol, wallets can not only hold currency, but also store virtual items.
4) In case of the wallet address, each Blockchain wallet corresponds to an address to uniquely identify the ID of the wallet.
5) In case of Block, the data structure of account book data updated by transactions within a certain period of time is recorded, a time stamp and a unique mark (such as digital fingerprint) of the previous block are marked. After the block is subjected to consensual verification of the nodes in the Blockchain network, it will be added to the end of the Blockchain to become a new block.
6) In case of Blockchain, blocks are combined by means of sequential connection to form a chain data structure, and the hash value of the previous block or its subset is referenced in each block, so as to ensure that the recorded transactions cannot be tampered with or forged by cryptography.
7) In case of Blockchain network, new blocks are incorporated into a set of a series of non-central nodes of the Blockchain by consensus.

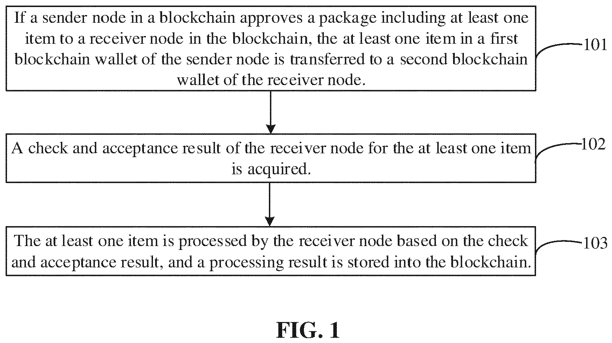

Based on the foregoing content, the embodiments of the present disclosure provide a Blockchain-based method for logistics physical item handover. The method is applied to a Blockchain-based platform for logistics physical item handover. The Blockchain-based platform for logistics physical item handover is configured on a Blockchain. As shown in FIG. 1, the method includes the following operations.

At S101, if a sender node in the blockchain approves a package including at least one item to a receiver node in the blockchain, the at least one item in a first blockchain wallet of the sender node is transferred to a second blockchain wallet of the receiver node.

Herein, each item has a unique digital rights certification identification.

In the embodiment of the present disclosure, the digital rights certification identification includes TokenID. Each item in each package is described by an ERC-721 standard. Each item has a unique TokenID, and each package includes at least one item.

In the embodiment of the present disclosure, exemplarily, the Blockchain-based platform for logistics physical item handover may pack at least one item into a package through the following codes. For any package, descriptions based on protobuff are implemented as follows.

```
 message Package {
  int64 gseq=1, ... // package serial number
  string trandate=2; ... // package time
   string from=3; ... // sending address
    string to=4; ... // pick-up address
  repeated GoodsInfo currencyInfo=5; //item information, which may be multiple
 } message GoodsInfo {
  GoodsBasic goodsBasic=1; // basic information
  GoodsAmtInfo goodsAmtInfo=2; //number information
 }
 message GoodsBasic {
 string tokenID=1; //TokenID of items
   string tokenName=2; //names of items
 string tokenSymbol=3; //symbols of unit of measure (number, weight, etc.) of items
 }
 message GoodsAmtInfo {
  float availAmt=1; //available amount (quantity)
  float frozenAmt=2; //freezing
  float wEntryAmt=3; //to be received
 float wOutAmt=4; //to be transferred out}
```

In practical application, firstly, the Blockchain-based platform for logistics physical item handover packs the at least one item according to the ERC-721 standard to get a package. Secondly, the Blockchain-based platform for logistics physical item handover acquires the TokenID of each item in the package through the sender node such as a node A in the Blockchain. Thirdly, the Blockchain-based platform for logistics physical item handover determines that the sender node approves the package including the at least one item to the receiver node such as a node B in the Blockchain, and then transfers the at least one item in the first Blockchain wallet of the sender node to the second Blockchain wallet of the receiver node. It is to be noted that at this time, although the Blockchain-based platform for logistics physical item handover transfers the at least one item in the first blockchain wallet of the sender node to the second Blockchain wallet of the receiver node such as the node B, the property right of the at least one item does not belong to the second blockchain wallet of the node B.

At S102, an check and acceptance result of the receiver node for the at least one item is acquired.

In the embodiment of the present disclosure, the check and acceptance result includes a result representing that the receiver node determines that the at least one item satisfies the check and acceptance condition or the result representing that the receiver node determines that the at least one item does not satisfy the check and acceptance condition. Here, the check and acceptance condition is associated with the attribute information of the at least one item and/or the logistics distribution information of the at least one item. For example, the check and acceptance condition includes, but is not limited to, a condition associated with the quality of the at least one item, a condition associated with the logistics distribution of the at least one item, a condition associated with the actual quantity of at least one item, etc.

In practical application, the Blockchain-based platform for logistics physical item handover transfers the at least one item in the first Blockchain wallet of the sender node to the second Blockchain wallet of the receiver node, and the Blockchain-based platform for logistics physical item handover acquires the check and acceptance result of the receiver node for the at least one item.

At S103, the at least one item is processed by the receiver node based on the check and acceptance result, and a processing result is stored into the Blockchain.

In the embodiment of the present disclosure, when the Blockchain-based platform for logistics physical item handover processes the at least one item based on the check and acceptance result through the receiver node, it includes executing sign-for processing or sign-for refusal processing on the at least one item.

In the embodiment of the present disclosure, at least one ERC-721 item approved by the sender node to the receiver node may not necessarily be received by the receiver node. It is to be understood that the approvation operation may be characterized as a delivery action of the logistics, and the delivery may or may not be successful. Whether the delivery succeeds or not is related to the check and acceptance result of the at least one ERC-721 item by the receiver node. Furthermore, the Blockchain-based platform for logistics physical item handover processes at least one item based on the check and acceptance result through the receiver node, and stores the processing result in the Blockchain in real time.

According to the Blockchain-based method for logistics physical item handover provided by the embodiments of the present disclosure, if the sender node in the Blockchain approves the package including the at least one item to the receiver node in the Blockchain, the at least one item in the first Blockchain wallet of the sender node is transferred to the second Blockchain wallet of the receiver node. Herein, each item has a unique digital rights certification identification. An check and acceptance result of the receiver node for the at least one item is acquired. The at least one item is processed by the receiver node based on the check and acceptance result and the processing result is stored in the Blockchain. It is to be understood that the processing result is part of the information that constitutes an electronic document. Therefore, the problems that it takes a long time to manually return documents to the sender and the documents are easy to be tampered with in the related art are solved. It is implemented that the electronic documents are stored in the Blockchain in time. It is ensured that the electronic documents are not tampered with and traceable. It is ensured that each node in the Blockchain may know the information in the electronic documents in real time and the logistics statuses of the items and the related information of the transfer of the property rights of the items are grasped.

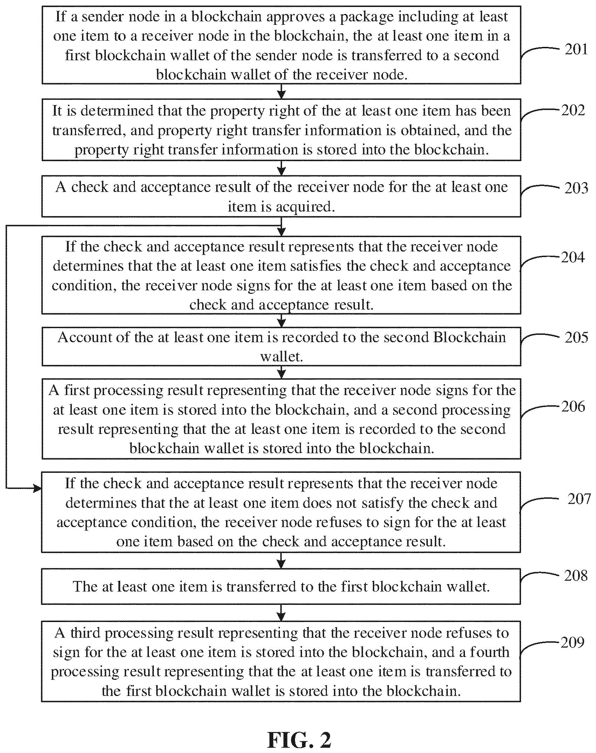

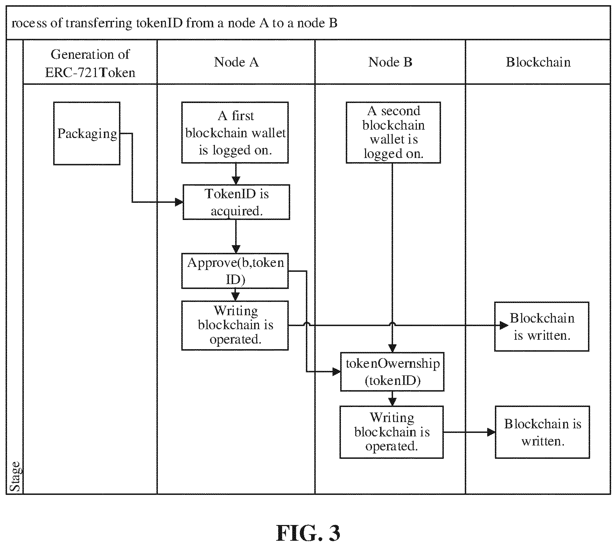

According to the foregoing embodiment, the embodiment of the present disclosure provides a Blockchain-based method for logistics physical item handover. The method is applied to a Blockchain-based platform for logistics physical item handover. As shown in FIGS 2, 3 and 4, the method includes the following operations.

At S201, if a sender node in a blockchain approves a package including at least one item to a receiver node in the blockchain, the at least one item in a first blockchain wallet of the sender node is transferred to a second blockchain wallet of the receiver node.

Herein, each item has a unique digital rights certification identification.

In the embodiment of the present disclosure, the sender node in the Blockchain, such as a node A, approves the package including the at least one item to the receiver node in the Blockchain, such as a node B, which may be described as a process in which the node A approves and approves each Token in a Package that satisfies an ERC-721 standard to the node B. Exemplarily, the definition of Approve is: function approve (address to, uint256 tokenID). Furthermore, the approving operation may be expressed as A. approve (B, tokened). The items corresponding to tokenID in the first Blockchain wallet of the node A are transferred to the second Blockchain wallet of the node B.

At S202, it is determined that the property right of the at least one item has been transferred and property right transfer information is obtained, and the property right transfer information is stored into the Blockchain.

In the embodiment of the present disclosure, in the case that the Blockchain-based platform for logistics physical item handover determines that the sender node in the Blockchain approves the package including at least one item to the receiver node in the Blockchain, the operation that the property right of the at least one item is determined to be transferred and the property right transfer information is obtained, and the property right transfer information is stored into the Blockchain may be first executed, and then the operation that the at least one item in the first Blockchain wallet of the sender node is transferred to the second Blockchain wallet of the receiver node is executed. Here, storing the property right transfer information into the Blockchain may also be called as operating writing Blockchain.

In another embodiment of the present disclosure, in the case that the Blockchain-based platform for logistics physical item handover determines that the sender node in the Blockchain approves the package including at least one item to the receiver node in the Blockchain, the operation that the at least one item in the first Blockchain wallet of the sender node is transferred to the second Blockchain wallet of the receiver node may be first executed, and then the operation that the property right of the at least one item is determined to be transferred and the property right transfer information is obtained, and the property right transfer information is stored into the Blockchain is executed.

In yet another embodiment of the present disclosure, in the case that the Blockchain-based platform for logistics physical item handover determines that the sender node in the Blockchain approves the package including at least one item to the receiver node in the Blockchain, the operation that the at least one item in the first Blockchain wallet of the sender node is transferred to the second Blockchain wallet of the receiver node and the operation that the property right of the at least one item is determined to be transferred and the property right transfer information is obtained, and the property right transfer information is stored into the Blockchain may be executed at the same time.

At S203, an check and acceptance result of the receiver node for the at least one item is acquired.

In the embodiment of the present disclosure, the check and acceptance result of the receiver node for the at least one item is used to confirm the property right of the at least one item, that is, the object to which it belongs.

In practical application, the Blockchain-based platform for logistics physical item handover determines that the property right of the at least one item has been transferred and property right transfer information is obtained, and the property right transfer information is stored into the Blockchain. The property right of the at least one item needs to be further confirmed on the basis of the Blockchain-based platform for logistics physical item handover. Here, the Blockchain-based platform for logistics physical item handover may further confirm the property right of the at least one item based on the check and acceptance result of the receiver node for the at least one item.

In the embodiment of the present disclosure, after the step 203 that the check and acceptance result of the receiver node for the at least one item is acquired, S204 to S206 or S207 to S209 may be selectively executed.

At S204, if the check and acceptance result represents that the receiver node determines that the at least one item satisfies the check and acceptance condition, the receiver node signs for the at least one item based on the check and acceptance result.

In the embodiment of the present disclosure, the behavior that the receiver node signs for the at least one item based on the check and acceptance result may be described as a takeOwnership (tokenID) action conforming to the ERC-721 standard. That is, if the Blockchain-based platform for logistics physical item handover acquires the takeOwnership (tokenID) action executed by the receiver node, it is determined that the receiver node signs for the at least one item based on the check and acceptance result.

Here, after the Blockchain-based platform for logistics physical item handover acquires the package including at least one item through the receiver node, it scans the package, takes out all TokenIDs, determines that the at least one item satisfies the check and acceptance condition if the acceptance is qualified, and then executes the takeOwnership action through the receiver node.

At S205, account of the at least one item is recorded to the second Blockchain wallet.

In the embodiment of the present disclosure, in the case that the receiver node executes the takeOwnership action, the Blockchain-based platform for logistics physical item handover records account of the at least one item into the second Blockchain wallet. At this time, it is confirmed that the property right of the at least one item belongs to the second Blockchain wallet of the receiver node. Here, the Blockchain-based platform for logistics physical item handover records account of the at least one item into the second Blockchain wallet, ensuring that all nodes in the Blockchain network can check the ownership of the property right of the at least one item.

At S206, a first processing result representing that the receiver node signs for the at least one item is stored into the Blockchain, and a second processing result representing that account of the at least one item is recorded to the second Blockchain wallet is stored into the Blockchain.

In the embodiment of the present disclosure, the sign-for of the at least one item in the logistics is described as the takeOwnership (tokenID) action of ERC-721, and only the items that have passed the acceptance will enter the second Blockchain wallet of the receiver node, which is characterized as the return process of logistics signing.

In the embodiment of the present disclosure, the Blockchain-based platform for logistics physical item handover stores the first processing result representing that the receiver node signs for the at least one item into the Blockchain, and stores the second processing result representing that account of the at least one item is recorded to the second Blockchain wallet into the Blockchain, ensuring that all nodes may conveniently check which items that satisfy the ERC-721 are currently held in each Blockchain wallet. Thus, it is implemented that a single physical item is described as the Token of ERC-721. Physical item handover is implemented. A final holder of the property right is recorded in the address of the Blockchain wallet currently holding the item. Here, storing the first processing result and the second processing result into the Blockchain may also be called as operating writing Blockchain.

At S207, if the check and acceptance result represents that the receiver node determines that the at least one item does not satisfy the check and acceptance condition, the receiver node refuses to sign for the at least one item based on the check and acceptance result.

In the embodiment of the present disclosure, the behavior that the receiver node refuses to sign for the at least one item based on the check and acceptance result may be described as a refuse (tokenID) action conforming to the ERC-721 standard. That is, if the Blockchain-based platform for logistics physical item handover acquires the refuse (tokenID) action executed by the receiver node, it is determined that the receiver node refuses to sign for the at least one item based on the check and acceptance result.

Here, after the Blockchain-based platform for logistics physical item handover acquires the package including at least one item through the receiver node, it scans the package, takes out all TokenIDs, determines that the at least one item does not satisfy the check and acceptance condition if the acceptance is unqualified, and then executes the refuse (tokenID) action through the receiver node.

At S208, the at least one item is transferred to the first Blockchain wallet.

In the embodiment of the present disclosure, in the case that the receiver node executes the refuse (tokenID) action, the Blockchain-based platform for logistics physical item handover transfers the at least one item to the first Blockchain wallet. That is, if the receiver node executes the Refuse (tokenID) action, the at least one item still returns to the first Blockchain wallet of the sender node such as the node A.

At S209, a third processing result representing that the receiver node refuses to sign for the at least one item is stored into the Blockchain, and a fourth processing result representing that the at least one item is transferred to the first Blockchain wallet is stored into the Blockchain.

In the embodiment of the present disclosure, in the case that the Blockchain-based platform for logistics physical item handover transfers the at least one item to the first Blockchain wallet, the Blockchain-based platform for logistics physical item handover stores the third processing result representing that the receiver node refuses to sign for the at least one item into the Blockchain, and stores the fourth processing result representing that the at least one item is transferred to the first Blockchain wallet into the Blockchain, ensuring that all nodes may conveniently check which items that satisfy the ERC-721 are currently held in each Blockchain wallet, and ensuring that all nodes may check a sign-for refusal operation of the receiver node for the at least one item, even including the reasons for refusal to sign. Here, storing the third processing result and the fourth processing result into the Blockchain may also be called as operating writing Blockchain.

Furthermore, in combination with the aforementioned method flow, the Blockchain-based method for logistics physical item handover in the embodiment of the present disclosure may also include the following steps.

At a1, a first operation of retrieving the first Blockchain wallet based on a first wallet address is acquired.

In the embodiment of the present disclosure, the operation purpose of the first operation includes, but is not limited to, finding the items that satisfy the ERC-721 in the first Blockchain wallet, and which items that satisfy the ERC-721 are transferred out of/into the first Blockchain wallet within a certain period of time.

In practical application, a user may use the first wallet address to log in to the first Blockchain wallet on the Blockchain-based platform for logistics physical item handover, and then execute the operation of checking the related information of the first Blockchain wallet.

At a2, based on the first operation, first information associated with items in the first Blockchain wallet is acquired through the first wallet address.

In the embodiment of the present disclosure, the first information includes information to be acquired for the operation purpose of the first operation. Here, in case of acquiring the first operation, the Blockchain-based platform for logistics physical item handover acquires the first information associated with the items in the first Blockchain wallet through the first wallet address based on the first operation.

In the embodiment of the present disclosure, for each node in the Blockchain network, each node may have a wallet address. Through the wallet address, the related information of the items in the Blockchain wallet corresponding to the wallet address may be checked in real time. Thus, it is implemented that the inventory information of the items in each Blockchain wallet may be checked in real time, and the transfer information of the items among the various Blockchain wallets may be tracked.

Furthermore, in combination with the aforementioned method flow, the Blockchain-based method for logistics physical item handover in the embodiment of the present disclosure may also include the following steps.

At b1, a second operation of retrieving the second Blockchain wallet based on a second wallet address is acquired.

In the embodiment of the present disclosure, the operation purpose of the second operation includes, but is not limited to, finding the items that satisfy the ERC-721 in the second Blockchain wallet, and which items that satisfy the ERC-721 are transferred out of/into the second Blockchain wallet within a certain period of time.

In practical application, a user may use the second wallet address to log in to the second Blockchain wallet on the Blockchain-based platform for logistics physical item handover, and then execute the operation of checking the related information of the second Blockchain wallet.

At b2, based on the second operation, second information associated with items in the second Blockchain wallet is acquired through the second wallet address.

In the embodiment of the present disclosure, the second information includes information to be acquired for the operation purpose of the second operation. Here, in case of acquiring the second operation, the Blockchain-based platform for logistics physical item handover acquires the second information associated with the items in the second Blockchain wallet through the second wallet address based on the second operation.

In the embodiment of the present disclosure, the handover Blockchain of items may be written directly, but the items are written directly into the database and not recorded in the Blockchain wallet of the Blockchain.

From the above, it is to be seen that each node in the Blockchain network, including the sender node and the receiver node, has a wallet address, so it is very convenient to check which items that satisfy ERC-721 are transferred out of/into the account corresponding to a node within a certain period of time from the Blockchain wallet corresponding to the wallet address. Each node in the Blockchain network, including the sender node and the receiver node, may easily check which items that satisfy ERC-721 are currently held in each Blockchain wallet. The item transaction operations are stored in the Blockchain. Goods are tokens that satisfy ERC-721, and are stored in the Blockchain wallets corresponding to different nodes.

It is to be noted that the descriptions of the same steps and contents in this embodiment as those in other embodiments may refer to the descriptions in other embodiments and will not be repeated here.

In conclusion, the embodiments of the present disclosure have the following beneficial effects: paper documents are canceled and electronic documents are employed. During item handover, the electronic documents representing the circulation of items are recorded on the Blockchain to prevent the electronic documents from being tampered with and traceable. At the same time, the electronic documents co-chain in real time, which ensures that all nodes of logistics physical item handover in the Blockchain know the logistics status in time. In addition, a single physical item is described as a Token of ERC-721, so that the physical item handover is implemented, and a final holder of the property right is recorded in the wallet address of the user who currently holds the item. Furthermore, the sign-for of a practical item in the logistics is described as the takeOwnership (tokenID) action of ERC-721, and only the items that have passed the acceptance will enter the Blockchain wallet of the receiver node, which is characterized as the return process of logistics signing. The delivery from the sender node to the receiver node is the action of approving, which is described as the approve to (tokenID) operation of ERC-721. Herein, the information corresponding to to is the wallet address of a consignee, and the information corresponding to the tokenID is the code of the ERC-721 item corresponding to the item. The delivery may or may not be successful, depending on whether the receiver node has executed the takeOwnership (tokenID) operation or Refuse (token ID) operation.

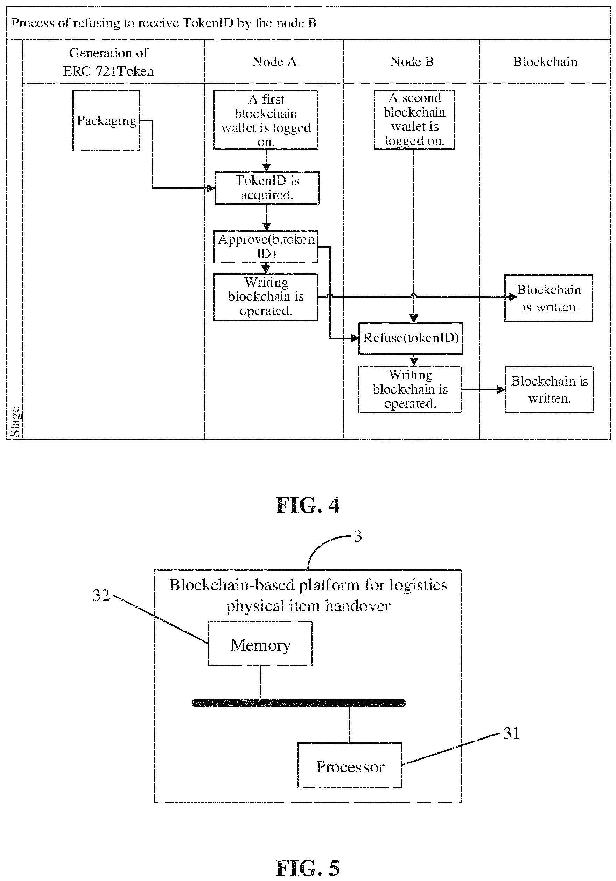

Based on the foregoing embodiments, the embodiment of the present disclosure provides a Blockchain-based platform for logistics physical item handover. The Blockchain-based platform for logistics physical item handover may be applied to a Blockchain-based method for logistics physical item handover provided by the corresponding embodiments in FIGS. 1-2. Referring to FIG. 5, the Blockchain-based platform for logistics physical item handover 3 includes: a memory 31 configured to store executable instructions and a processor 32.

The processor 32 is configured to execute the executable instructions stored in the memory 31 and implement the following steps.

If a sender node in a Blockchain approves a package including at least one item to a receiver node in the Blockchain, the at least one item in a first Blockchain wallet of the sender node is transferred to a second Blockchain wallet of the receiver node. Herein, each item has a unique digital rights certification identification.

A check and acceptance result of the receiver node for the at least one item is acquired.

The at least one item is processed by the receiver node based on the check and acceptance result, and a processing result is stored into the Blockchain.

In the embodiment of the present disclosure, the processor 32 is configured to execute the executable instructions stored in the memory 31 so as to implement the following steps.

If the sender node in the Blockchain approves the package including at least one item to the receiver node in the Blockchain, it is determined that the property right of the at least one item has been transferred and property right transfer information is obtained.

The property right transfer information is stored into the Blockchain.

In the embodiment of the present disclosure, the processor 32 is configured to execute the executable instructions stored in the memory 31 so as to implement the following steps.

If the check and acceptance result represents that the receiver node determines that the at least one item satisfies the check and acceptance condition, the receiver node signs for the at least one item based on the check and acceptance result.

Account of the at least one item is recorded to the second Blockchain wallet.

In the embodiment of the present disclosure, the processor 32 is configured to execute the executable instructions stored in the memory 31 so as to implement the following steps.

A first processing result representing that the receiver node signs for the at least one item is stored into the Blockchain.

A second processing result representing that account of the at least one item is recorded to the second Blockchain wallet is stored into the Blockchain.

In the embodiment of the present disclosure, the processor 32 is configured to execute the executable instructions stored in the memory 31 so as to implement the following steps.

If the check and acceptance result represents that the receiver node determines that the at least one item does not satisfy the check and acceptance condition, the receiver node refuses to sign for the at least one item based on the check and acceptance result.

The at least one item is transferred to the first Blockchain wallet.

In the embodiment of the present disclosure, the processor 32 is configured to execute the executable instructions stored in the memory 31 so as to implement the following steps.

A third processing result representing that the receiver node refuses to sign for the at least one item is stored into the Blockchain.

A fourth processing result representing that the at least one item is transferred to the first Blockchain wallet is stored into the Blockchain.

In the embodiment of the present disclosure, the processor 32 is configured to execute the executable instructions stored in the memory 31 so as to implement the following steps.

A first operation of retrieving the first Blockchain wallet based on a first wallet address is acquired.

Based on the first operation, first information associated with items in the first Blockchain wallet is acquired through the first wallet address.

In the embodiment of the present disclosure, the processor 32 is configured to execute the executable instructions stored in the memory 31 so as to implement the following steps.

A second operation of retrieving the second Blockchain wallet based on a second wallet address is acquired.

Based on the second operation, second information associated with items in the second Blockchain wallet is acquired through the second wallet address.

It is to be noted that the specific implementation process of the steps executed by the processor in the embodiment may refer to the implementation process in the Blockchain-based method for logistics physical item handover provided by the corresponding embodiments in FIGS. 1-2, which will not be repeated here.

Based on the foregoing embodiments, the embodiments of the present disclosure provide a storage medium in which executable instructions is stored. When the executable instructions is executed, the following steps may be implemented.

If a sender node in a Blockchain approves a package including at least one item to a receiver node in the Blockchain, the at least one item in a first Blockchain wallet of the sender node is transferred to a second Blockchain wallet of the receiver node. Herein, each item has a unique digital rights certification identification.

A check and acceptance result of the receiver node for the at least one item is acquired.

The at least one item is processed by the receiver node based on the check and acceptance result, and a processing result is stored into the Blockchain.

In the embodiment of the present disclosure, when the executable instructions is executed, the following steps may also be implemented.

If the sender node in the Blockchain approves the package including at least one item to the receiver node in the Blockchain, it is determined that the property right of the at least one item has been transferred and property right transfer information is obtained.

The property right transfer information is stored into the Blockchain.

In the embodiment of the present disclosure, when the executable instructions is executed, the following steps may also be implemented.

If the check and acceptance result represents that the receiver node determines that the at least one item satisfies the check and acceptance condition, the receiver node signs for the at least one item based on the check and acceptance result.

Account of the at least one item is recorded to the second Blockchain wallet.

In the embodiment of the present disclosure, when the executable instructions is executed, the following steps may also be implemented.

A first processing result representing that the receiver node signs for the at least one item is stored into the Blockchain.

A second processing result representing that account of the at least one item is recorded to the second Blockchain wallet is stored into the Blockchain.

In the embodiment of the present disclosure, when the executable instructions is executed, the following steps may also be implemented.

If the check and acceptance result represents that the receiver node determines that the at least one item does not satisfy the check and acceptance condition, the receiver node refuses to sign for the at least one item based on the check and acceptance result.

The at least one item is transferred to the first Blockchain wallet.

In the embodiment of the present disclosure, when the executable instructions is executed, the following steps may also be implemented.

A third processing result representing that the receiver node refuses to sign for the at least one item is stored into the Blockchain.

A fourth processing result representing that the at least one item is transferred to the first Blockchain wallet is stored into the Blockchain.

In the embodiment of the present disclosure, when the executable instructions is executed, the following steps may also be implemented.

A first operation of retrieving the first Blockchain wallet based on a first wallet address is acquired.

Based on the first operation, first information associated with items in the first Blockchain wallet is acquired through the first wallet address.

In the embodiment of the present disclosure, when the executable instructions is executed, the following steps may also be implemented.

A second operation of retrieving the second Blockchain wallet based on a second wallet address is acquired.

Based on the second operation, second information associated with items in the second Blockchain wallet is acquired through the second wallet address.

It is to be noted that the specific implementation process of the steps executed by the processor in the embodiment may refer to the implementation process in the Blockchain-based method for logistics physical item handover provided by the corresponding embodiments in FIGS. 1-2, which will not be repeated here.

The above is only the embodiments of the present disclosure and not intended to limit the scope of protection of the present disclosure. Any modifications, equivalent replacements, improvements and the like made within the spirit and scope of the present disclosure shall fall within the scope of protection of the present disclosure.

### INDUSTRIAL PRACTICABILITY

The embodiments of the present disclosure provide a Blockchain-based method and platform for logistics physical item handover, and a storage medium. The Blockchain-based method for logistics physical item handover includes: if a sender node in a Blockchain approves a package including at least one item to a receiver node in the Blockchain, the at least one item in a first Blockchain wallet of the sender node is transferred to a second Blockchain wallet of the receiver node. Herein, each item has a unique digital rights certification identification. A check and acceptance result of the receiver node for the at least one item is acquired. The at least one item is processed by the receiver node based on the check and acceptance result and the processing result is stored in the Blockchain. It is to be understood that the processing result is part of the information that constitutes an electronic document. Therefore, the problems that it takes a long time to manually return documents to the sender and the documents are easy to be tampered with in the related art are solved. It is implemented that the electronic documents are stored in the Blockchain in time. It is ensured that the electronic documents are not tampered with and traceable. It is ensured that each node in the Blockchain may know the information in the electronic documents in real time and the logistics statuses of the items and the related information of the transfer of the property rights of the items are grasped.

## Claims

1. A Blockchain-based method for logistics physical item handover, comprising:
transferring, if a sender node in a Blockchain approves a package comprising at least one item to a receiver node in the Blockchain, the at least one item in a first Blockchain wallet of the sender node to a second Blockchain wallet of the receiver node, wherein each item has a unique digital rights certification identification;
acquiring, a check and acceptance result of the receiver node for the at least one item; and
processing the at least one item by the receiver node based on the check and acceptance result, and storing a processing result into the Blockchain.

2. The method of claim 1, further comprising:
determining, if the sender node in the Blockchain approves the package comprising at least one item to the receiver node in the Blockchain, that a property right of the at least one item has been transferred, and obtaining property right transfer information; and
storing the property right transfer information into the Blockchain.

3. The method of claim 1, wherein processing the at least one item by the receiver node based on the check and acceptance result comprises:
signing for, if the check and acceptance result represents that the receiver node determines that the at least one item satisfies a check and acceptance condition, the at least one item by the receiver node based on the check and acceptance result; and
recording account of the at least one item to the second Blockchain wallet.

4. The method of claim 3, wherein storing the processing result into the Blockchain comprises:
storing a first processing result representing that the receiver node signs for the at least one item into the Blockchain; and
storing a second processing result representing that account of the at least one item is recorded to the second Blockchain wallet into the Blockchain.

5. The method of claim 1, wherein processing the at least one item by the receiver node based on the check and acceptance result comprises:
refusing, if the check and acceptance result represents that the receiver node determines that the at least one item does not satisfy the check and acceptance condition, to sign for the at least one item by the receiver node based on the check and acceptance result; and
transferring the at least one item to the first Blockchain wallet.

6. The method of claim 5, wherein storing the processing result into the Blockchain comprises:
storing a third processing result representing that the receiver node refuses to sign for the at least one item into the Blockchain; and
storing a fourth processing result representing that the at least one item is transferred to the first Blockchain wallet into the Blockchain.

7. The method of any one of claims 1-6, further comprising:
acquiring a first operation of retrieving the first Blockchain wallet based on a first wallet address; and
acquiring, based on the first operation, first information associated with items in the first Blockchain wallet through the first wallet address.

8. The method of any one of claims 1-6, further comprising:
acquiring a second operation of retrieving the second Blockchain wallet based on a second wallet address; and
acquiring, based on the second operation, second information associated with items in the second Blockchain wallet through the second wallet address.

9. A Blockchain-based platform for logistics physical item handover, comprising:
a memory, configured to store executable instructions; and
a processor, configured to execute the executable instructions stored in the memory to implement the Blockchain-based method for logistics physical item handover of any one of claims 1-8.

10. A Blockchain-based method for logistics physical item handover, comprising:
approving a package comprising at least one item to a receiver node in a Blockchain; and
transferring the at least one item in a first Blockchain wallet of a sender node to a second Blockchain wallet of the receiver node, wherein each item has a unique digital rights certification identification.

11. The method of claim 10, further comprising:
acquiring a first operation of retrieving the first Blockchain wallet based on a first wallet address; and
acquiring, based on the first operation, first information associated with items in the first Blockchain wallet through the first wallet address.

12. A Blockchain-based method for logistics physical item handover, comprising:
if a sender node in a Blockchain approves a package comprising at least one item to a receiver node in the Blockchain, and the at least one item in a first Blockchain wallet of the sender node is transferred to a second Blockchain wallet of the receiver node, checking and accepting the at least one item to obtain a check and acceptance result, wherein each item has a unique digital rights certification identification; and
processing the at least one item based on the check and acceptance result, and storing a processing result into the Blockchain.

13. The method of claim 12, further comprising:
determining, if the sender node in the Blockchain approves the package comprising at least one item to the receiver node in the Blockchain, that a property right of the at least one item has been transferred, and obtaining property right transfer information; and
storing the property right transfer information into the Blockchain.

14. The method of claim 12 or 13, wherein processing the at least one item based on the check and acceptance result comprises:
signing for, if the check and acceptance result represents that the receiver node determines that the at least one item satisfies a check and acceptance condition, the at least one item based on the check and acceptance result; and
recording account of the at least one item to the second Blockchain wallet.

15. The method of claim 14, wherein storing the processing result into the Blockchain comprises:
storing a first processing result representing that the receiver node signs for the at least one item into the Blockchain; and
storing a second processing result representing that account of the at least one item is recorded to the second Blockchain wallet into the Blockchain.

16. The method of claim 12 or 13, wherein processing the at least one item based on the check and acceptance result comprises:
refusing, if the check and acceptance result represents that the receiver node determines that the at least one item does not satisfy a check and acceptance condition, to sign for the at least one item based on the check and acceptance result; and
transferring the at least one item to the first Blockchain wallet.

17. The method of claim 16, wherein storing the processing result into the Blockchain comprises:
storing a third processing result representing that the receiver node refuses to sign for the at least one item into the Blockchain; and
storing a fourth processing result representing that the at least one item is transferred to the first Blockchain wallet into the Blockchain.

18. The method of claim 12, further comprising:
acquiring a second operation of retrieving the second Blockchain wallet based on a second wallet address; and
acquiring, based on the second operation, second information associated with items in the second Blockchain wallet through the second wallet address.

19. A storage medium having stored thereon executable instructions that when executed, cause a processor to execute the Blockchain-based method for logistics physical item handover of any one of claims 1-8.
